# EUROPEAN PATENT SPECIFICATION

(11) **EP 4 400 468 B1**
(45) Date of publication and mention of the grant of the patent: **25.11.2026**
(21) Application number: 24150839.9
(22) Date of filing: 09.01.2024
(51) Int. Cl.: B66B 31/00

(54) **PASSENGER CONVEYOR DEVICE**
PERSONENFÖRDERANLAGE
DISPOSITIF DE CONVOYAGE DE PASSAGERS

(30) Priority: 12.01.2023 CN 202310043126
(43) Date of publication of application: 17.07.2024
(73) Proprietor: KONE Corporation, 00330 Helsinki (FI)
(72) Inventor: Dai, Haifeng, Kunshan, 215316 (CN); Jiang, Jiesong Nathan, Kunshan, 215316 (CN)
(74) Representative: Kolster Oy Ab

(56) References cited:
- WO-A1-2020/179013
- JP-A- 2002 226 165
- JP-A- 2007 290 826
- US-A1- 2015 239 711
- DATABASE WPI Week 200268, Derwent World Patents Index; AN 2002-632168
- DATABASE WPI Week 200781, Derwent World Patents Index; AN 2007-878227

## Description

### TECHNICAL FIELD

The present disclosure relates to a passenger conveying device suitable for conveying object, in particular to a conveying device suitable for conveying object on a truss beam of a passenger conveying device or on an ordinary step.

### TECHNICAL BACKGROUND

For the solution of modernization of passenger conveyor, it is necessary to remove all the old passenger conveyor modules, but keep the truss of passenger conveyor. Then, a new passenger conveyor module needs to be installed on site, for example, an upper module of the passenger conveyor and a lower module of the passenger conveyor need to be installed on site.

In many cases, especially indoor passenger transport devices, elevator modules cannot be transported from one floor to another by elevators or hoists because of limited space. Therefore, it is necessary to design a conveying device that can slide on the truss beam of the passenger conveyor or on ordinary steps, which is used to transport heavy or large-volume objects, such as but not limited to the upper module of the passenger conveyor and the lower module of the passenger conveyor.

WO2020179013A1 disclosing an escalator equipment transportation device, or JP2007290826A disclosing a method and a device for carrying-in/out a component of a passenger conveyor presents the preamble of claim 1.

### SUMMARY

In order to solve one or more defects in the prior art, according to one aspect of the present disclosure, a passenger conveying device comprising a truss having truss side brackets and a plurality of truss beams connected between the truss side brackets and arranged at equal intervals along the length direction of the truss, and comprising a conveying device suitable for conveying objects is proposed according to claim 1.

The object to be transported is arranged on the conveying device.

The conveying device can move from a first position to a second position different from the first position along the length of the truss of the passenger conveying device, thereby conveying the objects to be conveyed from the first position to the second position.

According to the above aspect of the present disclosure, there is a height difference between the first position and the second position, or there is no height difference between the first position and the second position.

According to the above aspects of the present disclosure, the conveying device is provided with a wear-resistant component made of a wear-resistant material. The wear-resistant components are frictionally sliding on the truss beam.

According to the above aspects of the present disclosure, the wear-resistant material is polyamide (nylon).

According to the above aspects of the present disclosure, the conveying device includes a first longitudinal bracket, a second longitudinal bracket and a first transverse bracket.

The first transverse bracket is connected between a first end of the first longitudinal bracket and a first end of the second longitudinal bracket.

The first end of the first longitudinal bracket and the first end of the second longitudinal bracket are respectively provided with first arc-shaped parts.

A second end of the first longitudinal bracket and a second end of the second longitudinal bracket are respectively provided with a second arc-shaped assembly.

According to the above aspects of the present disclosure, both the first end of the first longitudinal bracket and the first end of the second longitudinal bracket have arc-shaped ends.

Each first arc-shaped part is fixedly fitted on the arc-shaped end part and each first arc-shaped part is fitted on the bottom surfaces of the first longitudinal bracket and the second longitudinal bracket.

According to the above aspects of the present disclosure, the second arc-shaped assembly includes a first bending part, a second bending part, a third substrate and a fourth arc-shaped part.

A first end of the first bending part is fixedly connected to the second end of the first longitudinal bracket and the second end of the second longitudinal bracket.

A second end of the first bending member is fixedly connected to a first end of the second bending member.

The third substrate is fixedly connected to the first bending part and the second bending part.

A second end of the second bending part is arc-shaped.

The fourth arc-shaped part is fixedly connected to the second end of the second bending part and the arc-shaped edge of the third substrate.

At the second end of the first longitudinal bracket and the second end of the second longitudinal bracket, the fourth arc-shaped part is fixedly connected to the bottom surfaces of the first longitudinal bracket and the second longitudinal bracket.

According to the above aspects of the present disclosure, a third substrate through hole is provided on the third substrate.

According to the above aspects of the present disclosure, the conveying device further comprises a second transverse bracket.

The second transverse bracket is connected between the first ends of the two second bending parts.

According to the above aspects of the present disclosure, the first transverse bracket and the second transverse bracket have telescopic structures, so that the distance between the first longitudinal bracket and the second longitudinal bracket can be adjusted.

According to the above-mentioned aspects of the present disclosure, first transverse bracket through holes in an elongated shape are formed on both ends of the first transverse bracket.

Second transverse bracket through holes in an elongated shape are formed on both ends of the second transverse bracket.

The first transverse bracket can be adjustably connected between the first end of the first longitudinal bracket and the first end of the second longitudinal bracket through a fastener passing through the through hole of the first transverse bracket.

The second transverse bracket can be adjustably connected between the first ends of the two second bending parts by a fastener passing through the through hole of the second transverse bracket.

According to the above aspects of the present disclosure, the wear-resistant components are fixedly installed on the bottom surfaces of the first longitudinal bracket and the second longitudinal bracket.

Two end parts of the wear-resistant components are adjacent to the first arc-shaped parts part and the fourth arc-shaped part respectively and are arranged to smoothly transition with the first arc-shaped parts and the fourth arc-shaped part.

The wear-resistant components can slide on the truss beam in friction, thereby reducing the frictional resistance between the conveying device and the truss beam and reducing the wear of the bottom surfaces of the first longitudinal bracket and the second longitudinal bracket and the truss beam.

According to the above aspects of the present disclosure, a plurality of module supporting parts are provided on the top surfaces of the first longitudinal bracket and the second longitudinal bracket.

The module supporting parts are used for installing the object to be transported and supporting the object to be transported.

According to the above aspects of the present disclosure, the first longitudinal bracket includes at least two first bracket sections, and two first bracket sections adjacent to each other are detachably connected together by fasteners.

The second longitudinal bracket comprises at least two second bracket sections, and two adjacent second bracket sections are detachably connected together through fasteners.

The dismountable first longitudinal bracket and the dismountable second longitudinal bracket are beneficial to dismounting the conveying device into a smaller volume after the conveying work is completed, thereby being beneficial to transportation and storage.

It can also be understood by those skilled in the art that each bracket section of the first longitudinal bracket and the second longitudinal bracket can have a telescopic structure, so that the conveying device can be adapted to truss beams with different distances.

The following features do not form part of the presently claimed invention.

According to the above aspects of the present disclosure, the conveying device further comprises a first longitudinal guardrail assembly and a second longitudinal guardrail assembly.

The first longitudinal guardrail assembly can be adjustably connected to the first longitudinal bracket and located outside the first longitudinal bracket.

The second longitudinal guardrail assembly can be adjustably connected to the second longitudinal bracket and located outside the second longitudinal bracket.

The distance between the first longitudinal guardrail assembly and the second longitudinal guardrail assembly can be adjusted.

According to the above aspects of the present disclosure, the first longitudinal guardrail assembly includes a first longitudinal guardrail body and a plurality of first longitudinal guardrail connectors.

The plurality of first longitudinal guardrail connectors are connected to the first longitudinal guardrail body and are arranged at equal intervals along the length direction of the first longitudinal guardrail body.

The second longitudinal guardrail assembly comprises a second longitudinal guardrail body and a plurality of second longitudinal guardrail connectors.

The plurality of second longitudinal guardrail connectors are connected to the second longitudinal guardrail body and are arranged at equal intervals along the length direction of the second longitudinal guardrail body.

According to the above aspects of the present disclosure, the first longitudinal guardrail connector is provided with an elongated first longitudinal guardrail through hole.

The first longitudinal guardrail connector can be adjustably connected to the first longitudinal bracket through a fastener passing through the first longitudinal guardrail through hole.

The second longitudinal guardrail connector is provided with an elongated second longitudinal guardrail through hole.

The second longitudinal guardrail connector can be adjustably connected to the second longitudinal bracket through a fastener passing through the second longitudinal guardrail through hole.

The first longitudinal guardrail assembly and the second longitudinal guardrail assembly help to prevent the truss side bracket from colliding with the first longitudinal bracket and the second longitudinal bracket.

According to the above aspects of the present disclosure, the object to be transported is an upper module of the passenger conveying device and/or a lower module of the passenger conveying device.

According to the above aspects of the present disclosure, the module supporting part is provided with a plurality of module mounting grooves, module fastener holes, module mounting notches and module spindle through holes.

The plurality of module mounting grooves, module fastener holes, module mounting notches and module spindle through holes are used for mounting the upper module and/or the lower module on the first longitudinal bracket and the second longitudinal bracket.

According to the above aspects of the present disclosure, the truss of the passenger conveying device includes a truss side bracket and a plurality of truss beams.

The first longitudinal bracket and the second longitudinal bracket of the conveying device can slide on the plurality of truss beams.

The first longitudinal bracket, the second longitudinal bracket, the first transverse bracket, the second transverse bracket, the first longitudinal guardrail component and the second longitudinal guardrail component of the conveying device are all located between the truss side brackets and within the height range of the truss side brackets.

The conveying device for conveying heavy objects according to the present disclosure can be used for the modernization of passenger conveying devices.

The conveying device according to the present disclosure can slide on the truss beams of the truss or on ordinary steps, and can safely transport heavy objects from a first position with height difference to a second position, and vice versa. It solves the problem that the limited space cannot transport large-volume objects.

The conveying device according to the present disclosure has a longitudinal bracket that can slide on the truss beam or the normal steps on site and has a first longitudinal guardrail assembly and a second longitudinal guardrail assembly to ensure the correct sliding of the conveying device. In addition, a winch or other towing machine can be installed at the top of the truss to tow the conveying device.

The prior art solution is to disassemble the module into small parts, put these small parts on the upper or lower floor of the elevator, and then install them on site. Compared with the prior art solution that modules need to be assembled on site and good accuracy cannot be maintained for assembly, the conveying device according to the present disclosure (pre-assembled elevator modules will be installed on the conveying device in advance) can save installation time, ensure good installation accuracy, and further save installation cost.

So far, in order that the detailed description of the disclosure herein can be better understood and the contribution of the disclosure to the prior art can be better realized, the disclosure has outlined the contents of the disclosure quite broadly. Of course, embodiments of the present disclosure will be described below and will form the subject of the appended claims.

### BRIEF DESCRIPTION OF DRAWINGS

Those skilled in the art will have a better understanding of this disclosure through the following drawings, and the advantages of this disclosure can be more clearly reflected. The drawings described here are only for illustrative purposes of selected embodiments, not all possible implementations, and are not intended to limit the scope of the present disclosure.
Fig. 1 shows a conveying device suitable for conveying objects according to the present disclosure, which can slide on a truss beam of a truss of a passenger conveying device;
Fig. 2 shows an upper module of a passenger conveyor and/or a lower module of a passenger conveyor installed on a conveying device according to the present disclosure;
Fig. 3 shows a schematic perspective view of a conveying device according to the present disclosure;
Fig. 4 shows a schematic perspective view of a first end of a conveying device according to the present disclosure, which shows the bottom of the conveying device;
Fig. 5 is a partially simplified view of fig. 4;
Fig. 6 shows a schematic perspective view of a first arc-shaped part according to the present disclosure;
Figs. 7 and 8 are perspective schematic views showing the second end of the conveying device according to the present disclosure from different perspectives, respectively;
Fig. 9 shows a perspective schematic view of the first and second longitudinal brackets and a second arc-shaped assembly installed on the first and second longitudinal brackets according to the present disclosure;
Fig. 10 shows a schematic perspective view of a first bending part according to the present disclosure;
Fig. 11 shows a perspective schematic view of a second bending part according to the present disclosure;
Fig. 12 shows a schematic perspective view of a third substrate according to the present disclosure;
Fig. 13 shows a perspective schematic view of a fourth arc-shaped part in an arc shape according to the present disclosure;
Fig. 14 shows a wear-resistant component according to the present disclosure;
Fig. 15 shows a bottom view of the conveying device according to the present disclosure, in which wear-resistant components are installed on the bottom surfaces of the first longitudinal bracket and the second longitudinal bracket, respectively;
Fig. 16 shows a schematic view of a first longitudinal bracket and a second longitudinal bracket respectively having two bracket sections according to the present disclosure;
Fig. 17 shows a schematic perspective view of a first longitudinal guardrail assembly and a second longitudinal guardrail assembly according to the present disclosure.

### DETAILED DESCRIPTION

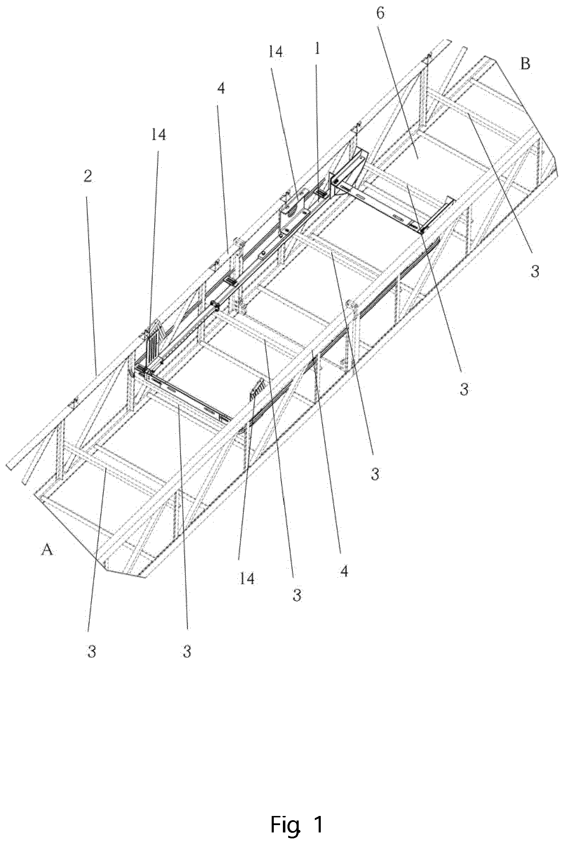

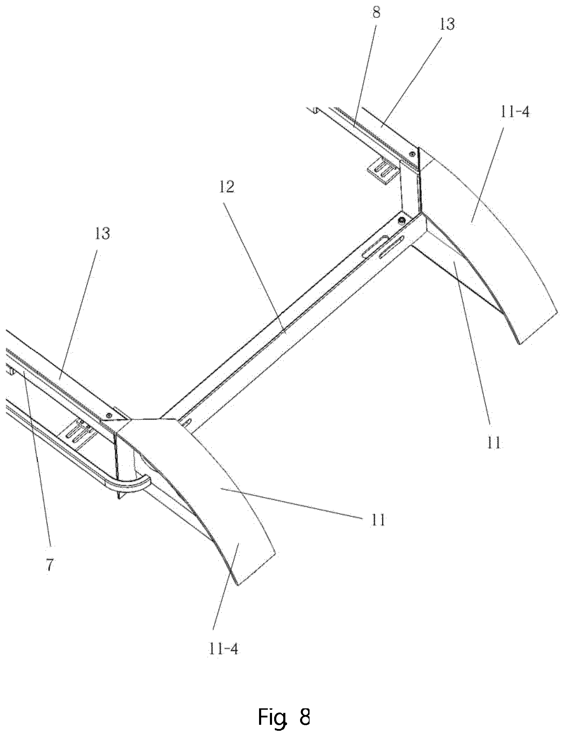

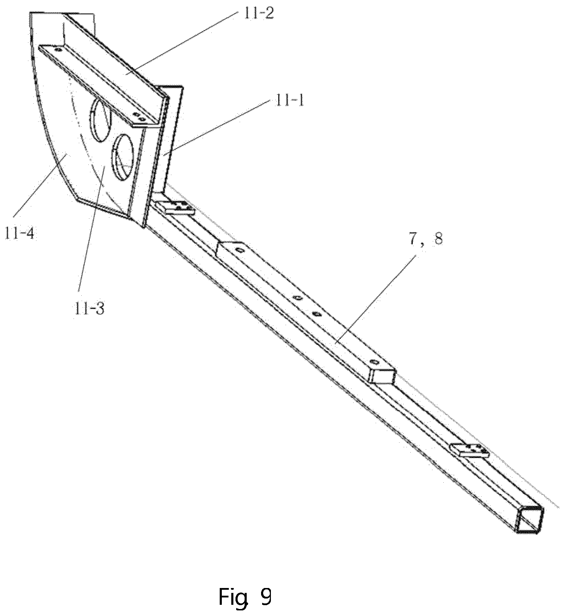

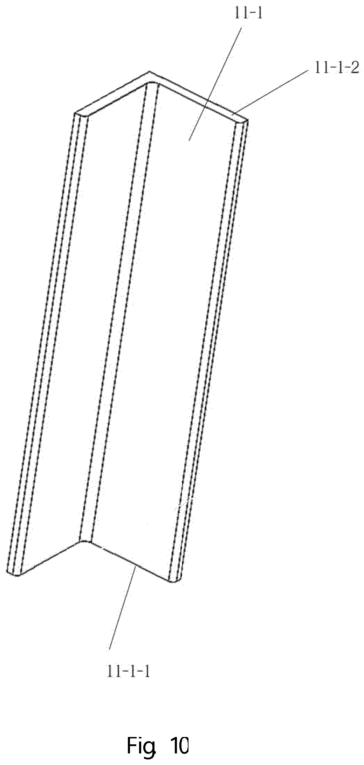

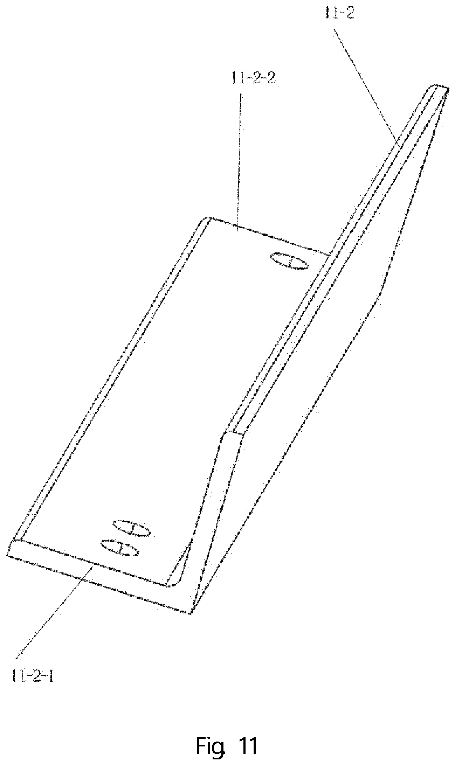

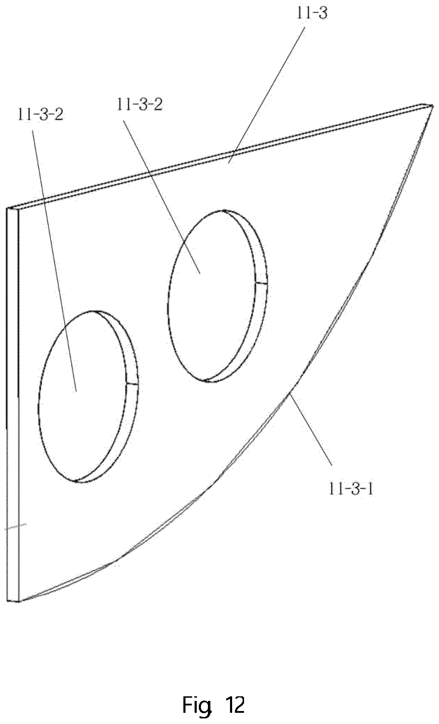

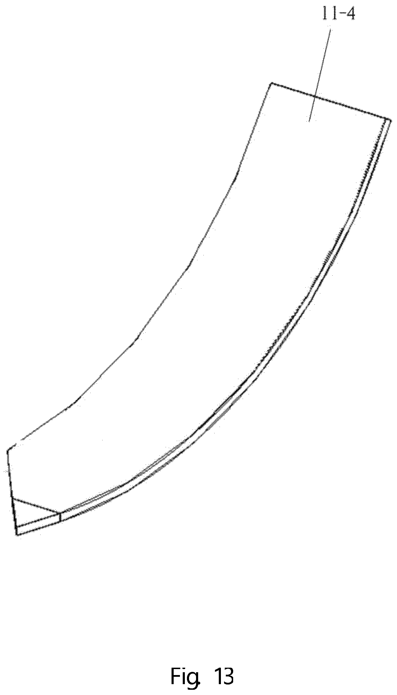

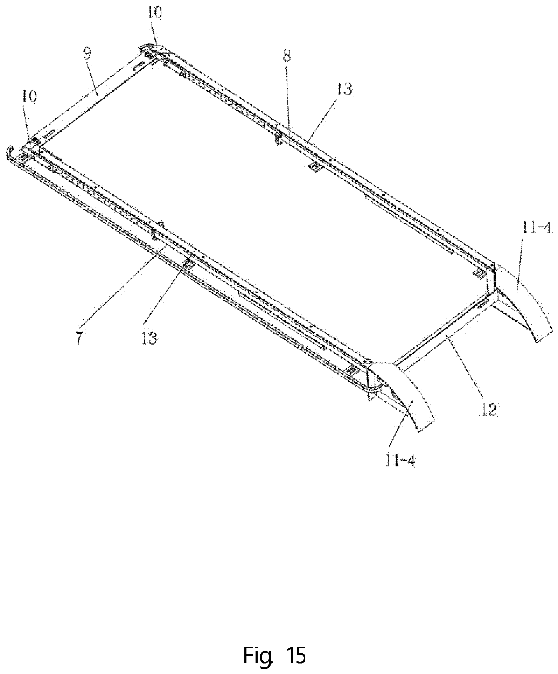

Hereinafter, a specific embodiment according to the present disclosure will be described in detail with reference to each of figs. 1 to 17.

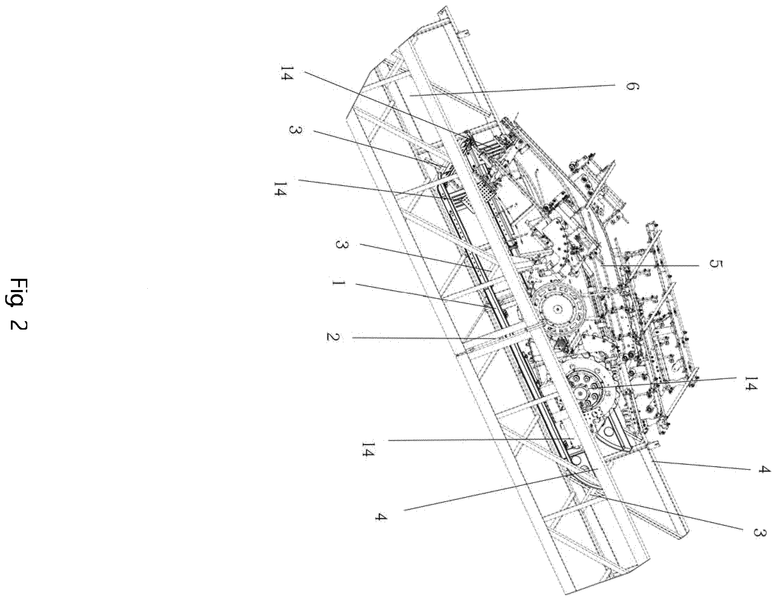

Fig. 1 shows a conveying device 1 suitable for conveying object 5 (see fig. 2) according to an embodiment of the present disclosure, which can slide on at least two truss beams 3 of a truss 2 of a passenger conveying device.

Fig. 2 shows an upper module of a passenger conveying device and/or a lower module of a passenger conveying device installed on a conveying device 1 according to the present disclosure.

The object 5 to be transported is arranged on the conveying device 1 (see fig. 2). In fig. 1, the truss 2 is arranged obliquely, and the conveying device 1 can move from a first position A to a second position B different from the first position A along the length of the truss 2 of the passenger conveyor, so as to transport the object to be transported from the first position A to the second position B, and vice versa. For example, the passenger conveying device is an escalator.

There is a height difference between the first position A and the second position B.

It can also be understood by those skilled in the art that there may be no height difference between the first position A and the second position B, for example, at the entrance and exit of a pedestrian escalator as a passenger conveying device.

The truss 2 of the passenger conveying device comprises a truss side bracket 4 and a plurality of truss beams 3.

The plurality of truss beams 3 are connected between truss side brackets 4 and arranged at equal intervals along the length direction of the truss 2.

In the configuration shown in figs. 1 and 2, the conveying device 1 is basically located in a frame recess 6 formed by the truss side brackets 4 and the plurality of truss beams 3, wherein the plurality of truss beams 3 support the conveying device 1 in the frame recess 6, and the truss side brackets 4 restrict the movement of the conveying device 1 in the frame recess 6 from both sides of the conveying device 1.

The object 5 to be transported is an upper module of the passenger conveying device and/or a lower module of the passenger conveying device.

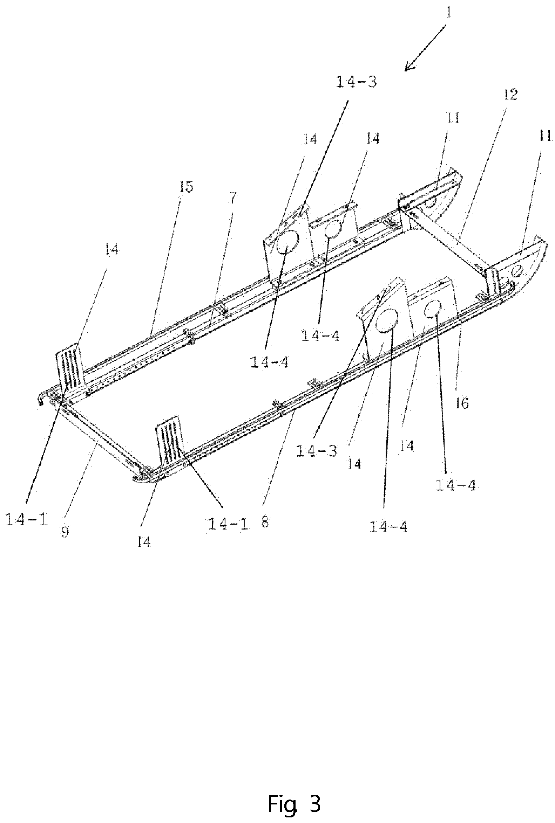

Fig. 3 shows a schematic perspective view of a conveying device 1 according to an embodiment of the present disclosure, which includes a first longitudinal bracket 7, a second longitudinal bracket 8 and a first transverse bracket 9.

The first transverse bracket 9 is connected between a first end of the first longitudinal bracket 7 and a first end of the second longitudinal bracket 8.

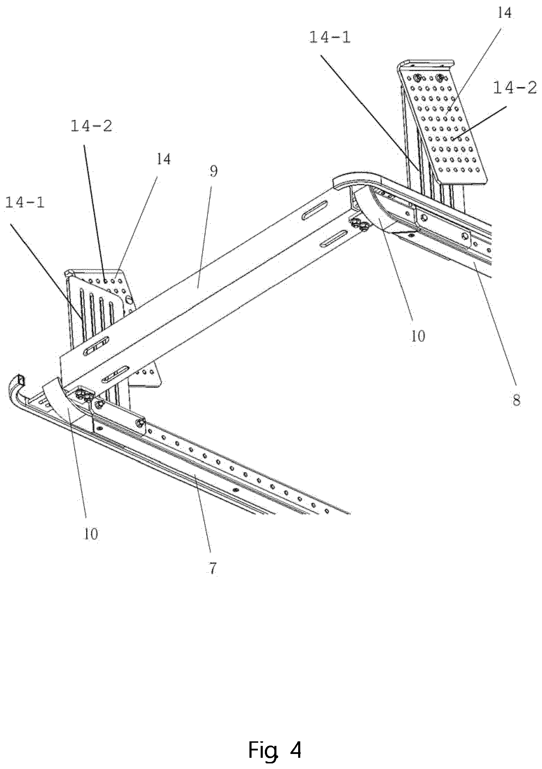

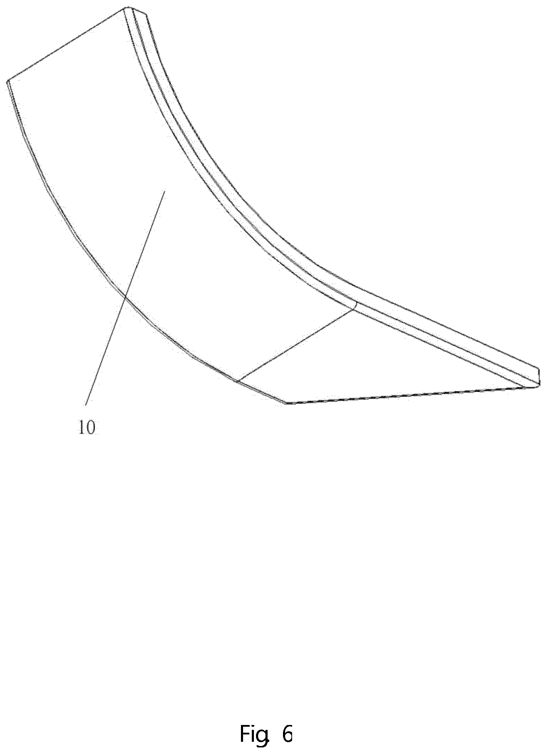

As shown in fig. 4, the first end of the first longitudinal bracket 7 and the first end of the second longitudinal bracket 8 are respectively provided with first arc-shaped parts 10 (see fig. 6).

A second end of the first longitudinal bracket 7 and a second end of the second longitudinal bracket 8 are respectively provided with a second arc assembly 11.

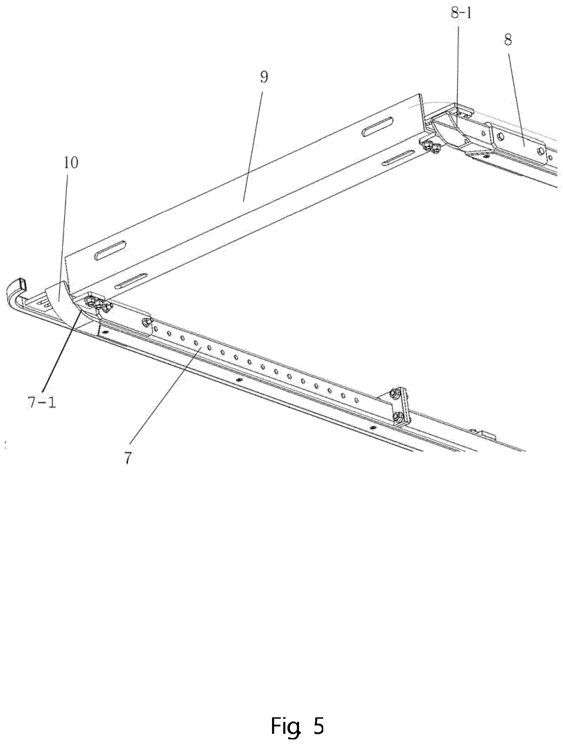

As shown in fig. 5, both the first end of the first longitudinal bracket 7 and the first end of the second longitudinal bracket 8 have arc-shaped ends 7-1 and 8-1.

The first arc-shaped part 10 is fixedly fitted on the arc-shaped end 8-1 and is fitted on the bottom surfaces of the first longitudinal bracket 7 and the second longitudinal bracket 8.

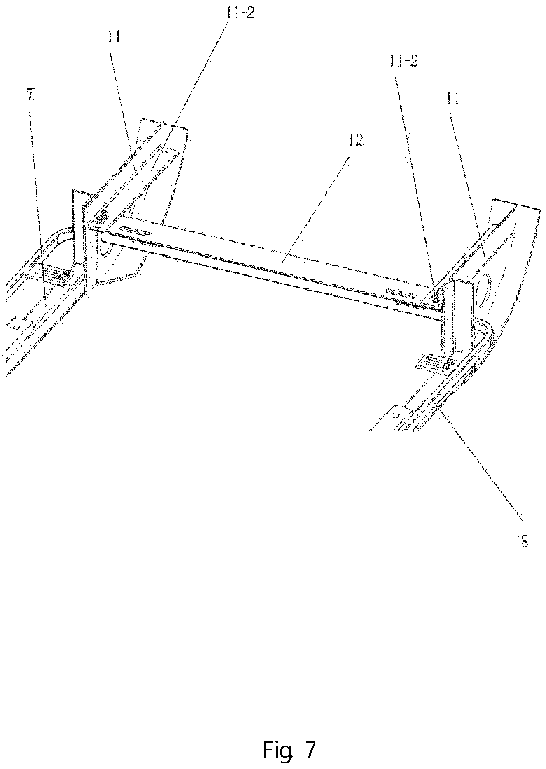

As shown in figs. 7 to 13, the second arc-shaped assembly 11 includes a first bending part 11-1, a second bending part 11-2, a third substrate 11-3 and a fourth arc-shaped part 11-4.

A first end 11-1-1 of the first bending part 11-1 is fixedly connected to the second end of the first longitudinal bracket 7 and the second end of the second longitudinal bracket 8.

A second end 11-1-2 of the first bending part 11-1 is fixedly connected to a first end 11-2-1 of the second bending part 11-2.

The third substrate 11-3 is fixedly connected to the first bending part 11-1 and the second bending part 11-2.

A second end 11-2-2 of the second bending part 11-2 is in an arc shape.

The fourth arc-shaped part 11-4 is fixedly connected to the second end 11-2-2 of the second bending part 11-2 and an arc-shaped edge 11-3-1 of the third substrate 11-3.

At the second end of the first longitudinal bracket 7 and the second end of the second longitudinal bracket 8, the fourth arc-shaped part 11-4 is fixedly connected to the bottom surfaces of the first longitudinal bracket 7 and the second longitudinal bracket 8.

The third substrate 11-3 is provided with a third substrate through hole 11-3-2.

The conveying device 1 further comprises a second transverse bracket 12.

The second transverse bracket 12 is connected between the first ends 11-2-1 of the two second bending members 11-2.

The first transverse bracket 9 and the second transverse bracket 12 have telescopic structures, so that the distance between the first longitudinal bracket 7 and the second longitudinal bracket 8 can be adjusted, thus being suitable for trusses of different types of passenger conveying devices. For example, the distance between the first longitudinal bracket 7 and the second longitudinal bracket 8 is, for example, but not limited to, 600mm, 800mm or 1000 mm.

In addition to the telescopic structure of the first transverse bracket 9 and the second transverse bracket 12, the elongated first transverse bracket through holes may be formed at both ends of the first transverse bracket 9.

The elongated second transverse bracket through holes are formed at both ends of the second transverse bracket 12.

The first transverse bracket 9 is adjustably connected between the first end of the first longitudinal bracket 7 and the first end of the second longitudinal bracket 8 by fasteners passing through the first transverse bracket through holes.

The second transverse bracket 12 can be adjustably connected between the first ends of the two second bending members 11-2 by fasteners passing through the second transverse bracket through holes.

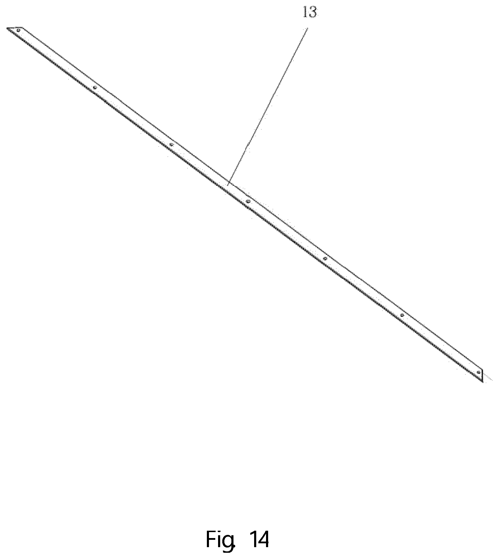

As shown in fig. 14, the conveying device 1 is provided with a wear-resistant components 13 made of a wear-resistant material, such as but not limited to polyamide (nylon).

The wear-resistant components 13 can slide on the truss beam 3 in a frictional manner, thereby reducing the frictional resistance between the conveying device 1 and the truss beam 3 and reducing the wear of the bottom surfaces of the first longitudinal bracket 7 and the second longitudinal bracket 8 and the truss beam 3.

The wear-resistant components 13 are fixedly installed on the bottom surfaces of the first longitudinal bracket 7 and the second longitudinal bracket 8.

The conveying device 1 can slide not only on at least two truss beams 3 of a truss 2 of an escalator or a pedestrian escalator, but also on a flat or inclined ground.

Two end portions of the wear-resistant components 13 are adjacent to the first arc-shaped part 10 and the fourth arc-shaped part 11-4 respectively and are arranged to smoothly transition with the first arc-shaped part 10 and the fourth arc-shaped part 11-4.

The wear-resistant components 13 may also be formed on the arc surfaces of the first arc-shaped part 10 and the fourth arc-shaped part 11-4. The first arc-shaped part 10 and the fourth arc-shaped part 11-4 facilitate the conveying device to cross the bent corner portion (not shown) of the truss, such as the joint between the inclined part of the truss and an upper platform part and a lower platform part of the elevator.

As shown in figs. 3 and 4, a plurality of module support parts 14 are provided on the top surfaces of the first longitudinal bracket 7 and the second longitudinal bracket 8.

The module supporting part 14 is used for installing the object 5 to be transported and supporting the object 5 to be transported.

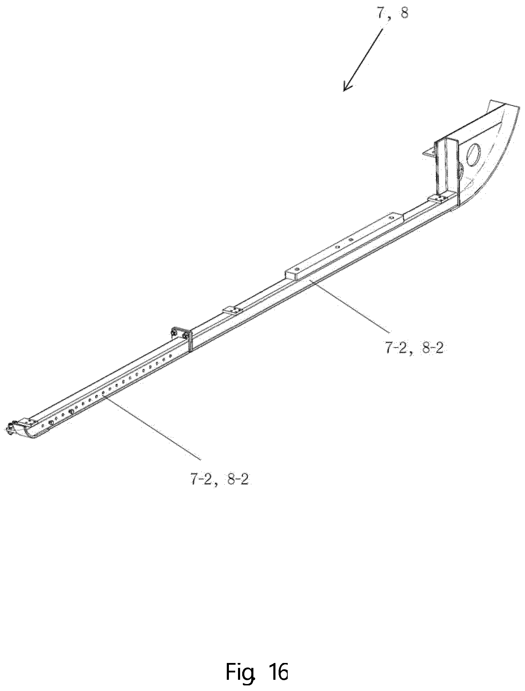

Fig. 16 shows a schematic diagram in which the first longitudinal bracket 7 and the second longitudinal bracket 8 have two bracket sections, respectively, according to an embodiment of the present disclosure. As shown in fig. 16, the first longitudinal bracket 7 includes at least two first bracket sections 7-2, and two adjacent first bracket sections 7-2 are detachably connected together by fasteners.

The second longitudinal bracket 8 includes at least two second bracket sections 8-2, and two adjacent second bracket sections 8-2 are detachably connected together by fasteners.

The detachable first longitudinal bracket 7 and the detachable second longitudinal bracket 8 are beneficial to disassembling the conveying device 1 into a smaller volume after the conveying work is completed, and are further beneficial to transportation and storage.

It can also be understood by those skilled in the art that each bracket section of the first longitudinal bracket 7 and the second longitudinal bracket 8 can have a telescopic structure, so that the conveying device can be adapted to truss beams with different distances.

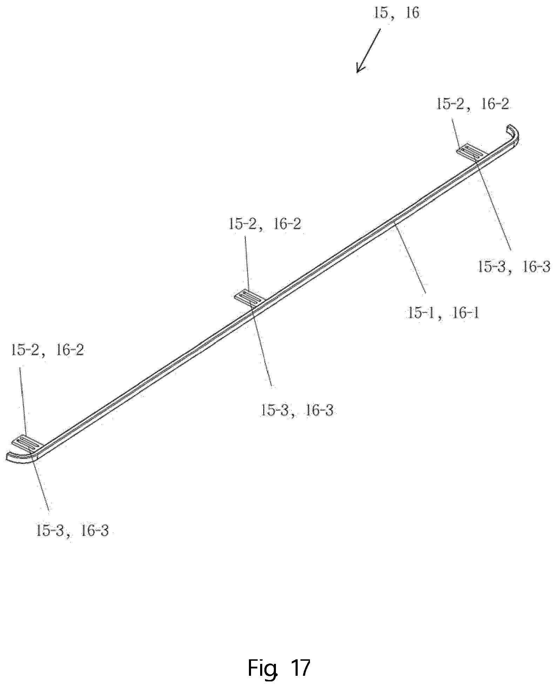

Fig. 17 shows a schematic perspective view of a first longitudinal guardrail assembly 15 and a second longitudinal guardrail assembly 16 according to an embodiment of the present disclosure. As shown in fig. 17, the conveying device 1 further includes the first longitudinal guardrail assembly 15 and the second longitudinal guardrail assembly 16.

The first longitudinal guardrail assembly 15 is adjustably connected to the first longitudinal bracket 7 and located outside the first longitudinal bracket 7.

The second longitudinal guardrail assembly 16 is adjustably connected to the second longitudinal bracket 8 and located outside the second longitudinal bracket 8.

The distance between the first longitudinal guardrail assembly 15 and the second longitudinal guardrail assembly 16 can be adjusted.

The first longitudinal guardrail assembly 15 and the second longitudinal guardrail assembly 16 help to prevent the truss side bracket 4 from colliding with the first longitudinal bracket 7 and the second longitudinal bracket 8.

The lengths of the first longitudinal guardrail assembly 15 and the second longitudinal guardrail assembly 16 are longer than those of the first longitudinal bracket 7 and the second longitudinal bracket 8, and two end portions of the first longitudinal guardrail assembly 15 and the second longitudinal guardrail assembly 16 respectively exceed the first transverse bracket 9 and the second transverse bracket 12.

The first longitudinal guardrail assembly 15 includes a first longitudinal guardrail body 15-1 and a plurality of first longitudinal guardrail connectors 15-2.

The two ends of the first longitudinal guardrail body 15-1 are curved bends.

The plurality of first longitudinal guardrail connectors 15-2 are connected to the first longitudinal guardrail body 15-1 and arranged at equal intervals along the length direction of the first longitudinal guardrail body 15-1.

The second longitudinal guardrail assembly 16 includes a second longitudinal guardrail body 16-1 and a plurality of second longitudinal guardrail connectors 16-2.

The two end portions of the second longitudinal guardrail body 16-1 are curved bends.

The plurality of second longitudinal guardrail connectors 16-2 are connected to the second longitudinal guardrail body 16-1 and arranged at equal intervals along the length direction of the second longitudinal guardrail body 16-1.

The first longitudinal guardrail connector 15-2 is provided with an elongated first longitudinal guardrail through hole 15-3.

The first longitudinal guardrail connector 15-2 can be adjustably connected to the first longitudinal bracket 7 by a fastener passing through the first longitudinal guardrail through hole 15-3.

The second longitudinal guardrail connector 16-2 is provided with an elongated second longitudinal guardrail through hole 16-3.

The second longitudinal guardrail connector 16-2 can be adjustably connected to the second longitudinal bracket 8 by a fastener passing through the second longitudinal guardrail through hole 16-3.

The module supporting member 14 is provided with a plurality of module mounting grooves 14-1, module fastener holes 14-2, module mounting notches 14-3 and module spindle through holes 14-4.

The plurality of module mounting grooves 14-1, module fastener holes 14-2, module mounting notches 14-3 and module spindle through holes 14-4 are configured for mounting the upper module and/or the lower module on the first longitudinal bracket 7 and the second longitudinal bracket 8.

The first longitudinal bracket 7 and the second longitudinal bracket 8 of the conveying device can slide on the plurality of truss beams 3.

The first longitudinal bracket 7, the second longitudinal bracket 8, the first transverse bracket 9, the second transverse bracket 12, the first longitudinal guardrail assembly 15 and the second longitudinal guardrail assembly 16 of the conveying device are all located between the truss side brackets 4 and within the height range of the truss side brackets 4.

## Claims

1. A passenger conveying device comprising a truss (2) having truss side brackets (4) and a plurality of truss beams (3) connected between the truss side brackets (4) and arranged at equal intervals along the length direction of the truss (2), and comprising a conveying device (1) suitable for conveying an object (5),
wherein the conveying device (1) is configured to slide on at least two truss beams (3) of the truss (2) of the passenger conveying device;
said object is configured to be transported on the conveying device;
the conveying device (1) is configured to move from a first position (A) to a second position (B) different from the first position along the length of the truss (2) of the passenger conveying device, thereby conveying said object to be transported from the first position to the second position,
**characterized in that**
the object to be transported is an upper module of the passenger conveying device and/or a lower module of the passenger conveying device, and
the conveying device (1) is located in a frame recess (6) formed by the truss side brackets (4) and the plurality of truss beams (3),
wherein the plurality of truss beams (3) are configured to support the conveying device (1) in the frame recess (6), and the truss side brackets (4) are configured to restrict the movement of the conveying device (1) in the frame recess (6) from both sides of the conveying device (1).

2. The passenger conveying device according to claim 1, wherein,
there is a height difference between the first position (A) and the second position (B), or
there is no height difference between the first position (A) and the second position (B);
or wherein,
wear-resistant components (13) made of wear-resistant material are arranged on the conveying device;
the wear-resistant components (13) are frictionally sliding on the truss beam (3).

3. The passenger conveying device according to claim 2, wherein,
the wear-resistant material is polyamide (nylon).

4. The passenger conveying device according to claim 3, wherein,
the conveying device comprises a first longitudinal bracket (7), a second longitudinal bracket (8) and a first transverse bracket (9);
the first transverse bracket is connected between a first end of the first longitudinal bracket and a first end of the second longitudinal bracket;
the first end of the first longitudinal bracket and the first end of the second longitudinal bracket are respectively provided with first arc-shaped parts (10);
a second end of the first longitudinal bracket and a second end of the second longitudinal bracket are respectively provided with a second arc-shaped assembly (11).

5. The passenger conveying device according to claim 4, wherein,
the first end of the first longitudinal bracket and the first end of the second longitudinal bracket both have arc-shaped ends (7-1; 8-1);
each first arc-shaped part is fixedly fitted on the arc-shaped end part and each first arc-shaped part is fitted on bottom surfaces of the first longitudinal bracket and the second longitudinal bracket;
or wherein,
the second arc-shaped assembly (11) comprises first bending parts (11-1), second bending parts (11-2), a third substrate (11-3) and a fourth arc-shaped part (11-4);
a first end of the first bending part is fixedly connected to the second end of the first longitudinal bracket and the second end of the second longitudinal bracket;
a second end of the first bending part is fixedly connected to a first end of the second bending part;
the third substrate is fixedly connected to the first bending part and the second bending part;
the second end of the second bending part is arc-shaped;
the fourth arc-shaped part is fixedly connected to a second end of the second bending part and the arc-shaped edge (11-3-1) of the third substrate; and
at the second end of the first longitudinal bracket and the second end of the second longitudinal bracket, the fourth arc-shaped part is fixedly connected to the bottom surfaces of the first longitudinal bracket and the second longitudinal bracket.

6. The passenger conveying device according to claim 5, wherein,
a third substrate through hole (11-3-2) is arranged on the third substrate;
or wherein,
the conveying device (1) further comprises a second transverse bracket (12);
the second transverse bracket is connected between the first ends (11-2-1) of the two second bending parts.

7. The passenger conveying device according to claim 6, wherein,
the first transverse bracket and the second transverse bracket have telescopic structures, so that the distance between the first longitudinal bracket and the second longitudinal bracket can be adjusted;
or wherein, elongated first transverse bracket through holes are formed on both ends of the first transverse bracket;
elongated second transverse bracket through holes are formed on both ends of the second transverse bracket;
the first transverse bracket is configured to be adjustably connected between the first end of the first longitudinal bracket and the first end of the second longitudinal bracket through a fastener passing through the through hole of the first transverse bracket;
the second transverse bracket is configured to be adjustably connected between the first ends of the two second bending parts by a fastener passing through the through hole of the second transverse bracket.

8. The passenger conveying device according to claim 6, wherein,
the wear-resistant components (13) are fixedly installed on the bottom surfaces of the first longitudinal bracket and the second longitudinal bracket;
two end parts of the wear-resistant components are adjacent to the first arc-shaped parts and the fourth arc-shaped part respectively and are arranged to smoothly transition with the first arc-shaped parts and the fourth arc-shaped part;
or wherein,
a plurality of module supporting parts (14) are arranged on the top surfaces of the first longitudinal bracket and the second longitudinal bracket;
the module supporting part is used for installing the object to be transported and supporting the object to be transported.

9. The passenger conveying device according to claim 8, wherein,
the first longitudinal bracket (7) comprises at least two first bracket sections (7-2), and two adjacent first bracket sections are detachably connected together through fasteners;
the second longitudinal bracket (8) comprises at least two second bracket sections (8-2), and two adjacent second bracket sections are detachably connected together through fasteners.

## Patentansprüche

1. Personenförderungsanlage, die ein Fachwerk (2) umfasst, das Fachwerk-Seitenhalterungen (4) und eine Vielzahl von Fachwerkträgern (3) aufweist, die zwischen den Fachwerk-Seitenhalterungen (4) verbunden sind und entlang der Längsrichtung des Fachwerks (2) in gleichen Abständen angeordnet sind, und eine Förderanlage (1) zum Fördern eines Objekts (5) umfasst,
wobei die Förderanlage (1) dazu ausgebildet ist, auf mindestens zwei Fachwerkträgern (3) des Fachwerks (2) der Personenförderungsanlage zu gleiten;
wobei das Objekt dazu ausgebildet ist, auf der Förderanlage transportiert zu werden;
die Förderanlage (1) dazu ausgebildet ist, sich von einer ersten Position (A) zu einer von der ersten Position verschiedenen zweiten Position (B) entlang der Länge des Fachwerks (2) der Personenförderungsanlage zu bewegen, wodurch das zu transportierende Objekt von der ersten Position zu der zweiten Position gefördert wird,
**dadurch gekennzeichnet, dass**
das zu transportierende Objekt ein oberes Modul der Personenförderungsanlage und/oder ein unteres Modul der Personenförderungsanlage ist, und
die Förderanlage (1) in einer Rahmenaussparung (6) gelegen ist, die durch die Fachwerk-Seitenhalterungen (4) und die Vielzahl von Fachwerkträgern (3) gebildet ist,
wobei die Vielzahl von Fachwerkträgern (3) dazu ausgebildet ist, die Förderanlage (1) in der Rahmenaussparung (6) zu stützen, und die Fachwerk-Seitenhalterungen (4) dazu ausgebildet sind, die Bewegung der Förderanlage (1) in der Rahmenaussparung (6) von beiden Seiten der Förderanlage (1) zu beschränken.

2. Personenförderungsanlage nach Anspruch 1, wobei,
zwischen der ersten Position (A) und der zweiten Position (B) ein Höhenunterschied besteht, oder
zwischen der ersten Position (A) und der zweiten Position (B) kein Höhenunterschied besteht;
oder wobei,
auf der Förderanlage verschleißfeste Bauteile (13) aus verschleißfestem Material angeordnet sind;
die verschleißfesten Bauteile (13) reibend auf dem Fachwerkträger (3) gleiten.

3. Personenförderungsanlage nach Anspruch 2, wobei,
das verschleißfeste Material Polyamid (Nylon) ist.

4. Personenförderungsanlage nach Anspruch 3, wobei,
die Förderanlage einen ersten Längsträger (7), einen zweiten Längsträger (8) und einen ersten Querträger (9) umfasst;
der erste Querträger zwischen einem ersten Ende des ersten Längsträgers und einem ersten Ende des zweiten Längsträgers verbunden ist;
das erste Ende des ersten Längsträgers und das erste Ende des zweiten Längsträgers jeweils mit ersten bogenförmigen Teilen (10) bereitgestellt sind;
ein zweites Ende des ersten Längsträgers und ein zweites Ende des zweiten Längsträgers jeweils mit einer zweiten bogenförmigen Baugruppe (11) bereitgestellt sind.

5. Personenförderungsanlage nach Anspruch 4, wobei,
das erste Ende des ersten Längsträgers und das erste Ende des zweiten Längsträgers beide bogenförmige Endabschnitte (7-1; 8-1) aufweisen;
jeder erste bogenförmige Teil fest auf den bogenförmigen Endabschnitt aufgesetzt ist und jeder erste bogenförmige Teil auf Unterseiten des ersten Längsträgers und des zweiten Längsträgers aufgesetzt ist;
oder wobei,
die zweite bogenförmige Baugruppe (11) erste Biegeteile (11-1), zweite Biegeteile (11-2), eine dritte Grundplatte (11-3) und einen vierten bogenförmigen Teil (11-4) umfasst;
ein erstes Ende des ersten Biegeteils fest mit dem zweiten Ende des ersten Längsträgers und dem zweiten Ende des zweiten Längsträgers verbunden ist;
ein zweites Ende des ersten Biegeteils fest mit einem ersten Ende des zweiten Biegeteils verbunden ist;
die dritte Grundplatte fest mit dem ersten Biegeteil und dem zweiten Biegeteil verbunden ist;
das zweite Ende des zweiten Biegeteils bogenförmig ist;
der vierte bogenförmige Teil fest mit einem zweiten Ende des zweiten Biegeteils und der bogenförmigen Kante (11-3-1) der dritten Grundplatte verbunden ist; und
an dem zweiten Ende des ersten Längsträgers und dem zweiten Ende des zweiten Längsträgers der vierte bogenförmige Teil fest mit den Unterseiten des ersten Längsträgers und des zweiten Längsträgers verbunden ist.

6. Personenförderungsanlage nach Anspruch 5, wobei,
ein Durchgangsloch der dritten Grundplatte (11-3-2) auf der dritten Grundplatte angeordnet ist;
oder wobei,
die Förderanlage (1) weiter einen zweiten Querträger (12) umfasst;
der zweite Querträger zwischen den ersten Enden (11-2-1) der zwei zweiten Biegeteile verbunden ist.

7. Personenförderungsanlage nach Anspruch 6, wobei,
der erste Querträger und der zweite Querträger Teleskopstrukturen aufweisen, so dass der Abstand zwischen dem ersten Längsträger und dem zweiten Längsträger eingestellt werden kann;
oder wobei,
an beiden Enden des ersten Querträgers langgestreckte erste Querträger-Durchgangslöcher gebildet sind;
an beiden Enden des zweiten Querträgers langgestreckte zweite Querträger-Durchgangslöcher gebildet sind;
der erste Querträger dazu ausgebildet ist, zwischen dem ersten Ende des ersten Längsträgers und dem ersten Ende des zweiten Längsträgers durch ein durch das Durchgangsloch des ersten Querträgers hindurchgehendes Befestigungselement verstellbar verbunden zu werden;
der zweite Querträger dazu ausgebildet ist, zwischen den ersten Enden der zwei zweiten Biegeteile durch ein durch das Durchgangsloch des zweiten Querträgers hindurchgehendes Befestigungselement verstellbar verbunden zu werden.

8. Personenförderungsanlage nach Anspruch 6, wobei,
die verschleißfesten Bauteile (13) fest auf den Unterseiten des ersten Längsträgers und des zweiten Längsträgers installiert sind;
zwei Endteile der verschleißfesten Bauteile jeweils an die ersten bogenförmigen Teile und den vierten bogenförmigen Teil angrenzen und so angeordnet sind, dass sie glatt in die ersten bogenförmigen Teile und den vierten bogenförmigen Teil übergehen;
oder wobei,
auf den Oberseiten des ersten Längsträgers und des zweiten Längsträgers eine Vielzahl von Modulstützteilen (14) angeordnet ist;
das Modulstützteil zum Installieren des zu transportierenden Objekts und zum Stützen des zu transportierenden Objekts verwendet wird.

9. Personenförderungsanlage nach Anspruch 8, wobei,
der erste Längsträger (7) mindestens zwei erste Trägerabschnitte (7-2) umfasst und zwei benachbarte erste Trägerabschnitte durch Befestigungselemente lösbar miteinander verbunden sind;
der zweite Längsträger (8) mindestens zwei zweite Trägerabschnitte (8-2) umfasst und zwei benachbarte zweite Trägerabschnitte durch Befestigungselemente lösbar miteinander verbunden sind.

## Revendications

1. Dispositif de convoyage de passagers comprenant un treillis (2) présentant des supports (4) latéraux de treillis et une pluralité de poutres de treillis (3) reliées entre les supports latéraux de treillis (4) et agencées à intervalles égaux le long de la direction de longueur du treillis (2), et comprenant un dispositif de convoyage (1) approprié pour convoyer un objet (5),
dans lequel le dispositif de convoyage (1) est configuré pour glisser sur au moins deux poutres de treillis (3) du treillis (2) du dispositif de convoyage de passagers ; ledit objet est configuré pour être transporté sur le dispositif de convoyage ;
le dispositif de convoyage (1) est configuré pour se déplacer depuis une première position (A) jusqu'à une deuxième position (B) différente de la première position le long de la longueur du treillis (2) du dispositif de convoyage de passagers, convoyant ainsi ledit objet à transporter depuis la première position jusqu'à la deuxième position,
**caractérisé en ce que**
l'objet à transporter est un module supérieur du dispositif de convoyage de passagers et/ou un module inférieur du dispositif de convoyage de passagers, et
le dispositif de convoyage (1) est situé dans un évidement de cadre (6) formé par les supports (4) latéraux de treillis et la pluralité de poutres de treillis (3),
dans lequel la pluralité de poutres de treillis (3) sont configurées pour supporter le dispositif de convoyage (1) dans l'évidement de cadre (6), et les supports (4) latéraux de treillis sont configurés pour limiter le mouvement du dispositif de convoyage (1) dans l'évidement de cadre (6) depuis les deux côtés du dispositif de convoyage (1).

2. Dispositif de convoyage de passagers selon la revendication 1, dans lequel,
il existe une différence de hauteur entre la première position (A) et la deuxième position (B), ou
il n'existe pas de différence de hauteur entre la première position (A) et la deuxième position (B) ;
ou dans lequel,
des composants résistants à l'usure (13) constitués d'un matériau résistant à l'usure sont agencés sur le dispositif de convoyage ;
les composants résistants à l'usure (13) glissent par frottement sur la poutre de treillis (3).

3. Dispositif de convoyage de passagers selon la revendication 2, dans lequel,
le matériau résistant à l'usure est du polyamide (nylon).

4. Dispositif de convoyage de passagers selon la revendication 3, dans lequel,
le dispositif de convoyage comprend un premier support longitudinal (7), un deuxième support longitudinal (8) et un premier support transversal (9) ;
le premier support transversal est relié entre une première extrémité du premier support longitudinal et une première extrémité du deuxième support longitudinal ;
la première extrémité du premier support longitudinal et la première extrémité du deuxième support longitudinal sont respectivement pourvues de premières parties (10) en forme d'arc ; une deuxième extrémité du premier support longitudinal et une deuxième extrémité du deuxième support longitudinal sont respectivement pourvues d'un deuxième ensemble (11) en forme d'arc.

5. Dispositif de convoyage de passagers selon la revendication 4, dans lequel,
la première extrémité du premier support longitudinal et la première extrémité du deuxième support longitudinal présentent toutes deux une extrémité (7-1 ; 8-1) en forme d'arc ;
chaque première partie en forme d'arc est montée de manière fixe sur la partie d'extrémité en forme d'arc et chaque première partie en forme d'arc est montée sur des surfaces inférieures du premier support longitudinal et du deuxième support longitudinal ; ou dans lequel,
le deuxième ensemble (11) en forme d'arc comprend de premières parties (11-1) de courbure, de deuxièmes parties (11-2) de courbure, un troisième substrat (11-3) et une quatrième partie (11-4) en forme d'arc ;
une première extrémité de la première partie de courbure est reliée de manière fixe à la deuxième extrémité du premier support longitudinal et à la deuxième extrémité du deuxième support longitudinal ;
une deuxième extrémité de la première partie de courbure est reliée de manière fixe à une première extrémité de la deuxième partie de courbure ;
le troisième substrat est relié de manière fixe à la première partie de courbure et à la deuxième partie de courbure ;
la deuxième extrémité de la deuxième partie de courbure est en forme d'arc ;
la quatrième partie en forme d'arc est reliée de manière fixe à une deuxième extrémité de la deuxième partie de courbure et au bord (11-3-1) en forme d'arc du troisième substrat ; et à la deuxième extrémité du premier support longitudinal et à la deuxième extrémité du deuxième support longitudinal, la quatrième partie en forme d'arc est reliée de manière fixe aux surfaces inférieures du premier support longitudinal et du deuxième support longitudinal.

6. Dispositif de convoyage de passagers selon la revendication 5, dans lequel,
un trou traversant du troisième substrat (11-3-2) est agencé sur le troisième substrat ; ou dans lequel,
le dispositif de convoyage (1) comprend en outre un deuxième support transversal (12) ;
le deuxième support transversal est relié entre les premières extrémités (11-2-1) des deux deuxièmes parties de courbure.

7. Dispositif de convoyage de passagers selon la revendication 6, dans lequel,
le premier support transversal et le deuxième support transversal présentent des structures télescopiques, de sorte que la distance entre le premier support longitudinal et le deuxième support longitudinal peut être ajustée ; ou dans lequel,
des trous traversants oblongs du premier support transversal sont formés sur les deux extrémités du premier support transversal ;
des trous traversants oblongs du deuxième support transversal sont formés sur les deux extrémités du deuxième support transversal ;
le premier support transversal est configuré pour être relié de manière ajustable entre la première extrémité du premier support longitudinal et la première extrémité du deuxième support longitudinal par un élément de fixation passant à travers le trou traversant du premier support transversal ;
le deuxième support transversal est configuré pour être relié de manière ajustable entre les premières extrémités des deux deuxièmes parties de courbure par un élément de fixation passant à travers le trou traversant du deuxième support transversal.

8. Dispositif de convoyage de passagers selon la revendication 6, dans lequel,
les composants résistants à l'usure (13) sont installés de manière fixe sur les surfaces inférieures du premier support longitudinal et du deuxième support longitudinal ;
deux parties d'extrémité des composants résistants à l'usure sont adjacentes aux premières parties en forme d'arc et à la quatrième partie en forme d'arc respectivement et sont agencées de manière à effectuer une transition douce avec les premières parties en forme d'arc et la quatrième partie en forme d'arc ; ou dans lequel,
une pluralité de parties de support de module (14) sont agencées sur les surfaces supérieures du premier support longitudinal et du deuxième support longitudinal ;
la partie de support de module est utilisée pour installer l'objet à transporter et supporter l'objet à transporter.

9. Dispositif de convoyage de passagers selon la revendication 8, dans lequel,
le premier support longitudinal (7) comprend au moins deux premières sections (7-2) de support, et deux premières sections de support adjacentes sont reliées ensemble de manière amovible au moyen des éléments de fixation ;
le deuxième support longitudinal (8) comprend au moins deux deuxièmes sections (8-2) de support, et deux deuxièmes sections de support adjacentes sont reliées ensemble de manière amovible au moyen des éléments de fixation.
